**Europäisches Patentamt**

**European Patent Office**

**Office européen des brevets**

(19)

(11) **EP 1 587 277 A2**

(12) **EUROPEAN PATENT APPLICATION**

(43) Date of publication:
**19.10.2005 Bulletin 2005/42**

(51) Int Cl.⁷: **H04L 29/06**, H04L 29/08,
**H04L 12/28**

(21) Application number: **05252365.1**

(22) Date of filing: **15.04.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **15.04.2004 JP 2004120750**

(71) Applicant: **SONY CORPORATION**
**Tokyo (JP)**

(72) Inventors:
• **Yoneda, Michiaki, Sony Corporation**
**Shinagawa-Ku, Tokyo (JP)**
• **Kudou, Shigetaka, Sony Corporation**
**Shinagawa-Ku, Tokyo (JP)**

(74) Representative: **Smith, Samuel Leonard**
**J.A. Kemp & Co.,**
**14 South Square,**
**Gray's Inn**
**London WC1R 5JJ (GB)**

(54) **Device, system and method for defining a response waiting time before timeout**

(57)     The present invention provides an information processing terminal device (40) that is adapted to define a response waiting time before timeout. The information processing terminal device (40) includes a communication section (41) transmitting data to and receiving data from an information providing apparatus (10,20,30), a timing section (42) timing the duration from the time of transmitting data from the communication section (41) to the time of receiving a response from the information providing apparatus (10,20,30) made to the transmitted data, and a communication controller (43) defining a response waiting time for the information providing apparatus (10,20,30) as a function of the duration timed by the timing section and deciding whether a communication is available between the communication section (41) and the information providing apparatus (10,20,30) by referring to the defined response waiting time.

FIG.1

EP 1 587 277 A2

## Description

This invention relates to a communication system that operates as a client server system, an information processing terminal device that operates as client in such a system and a communication method. More particularly, the present invention relates to a communication system, an information processing terminal device and a communication method having a connection timeout feature.

In an environment where electronic appliances are interconnected in a client-server system comprising computers (clients) that are operated by the users, files and a computer (server) that centrally controls all the other devices connected to it, processing operations are efficiently distributed among the clients and the server. However, the time that has to be spent before the interconnection of the server and the clients is established tends to be extended as the volume of data and the number of client terminals increase, although it may depend on the performance of the server. Particularly, when more than one servers are connected to the clients, the difference of response time among the different servers is remarkable.

On the Internet, data base servers cooperate with WWW servers. When a client specifies a URL on a web browser and accesses a WWW server, a descriptive image using the HTML (hypertext markup language) is transmitted from the WWW server to the client. If there is no response from the WWW server on the web browser after the elapse of a predetermined period of time (e.g., 5 minutes), the access becomes an error and the session is terminated. Additionally, a "timeout feature" is provided so that the WWW server terminates the session when the timeout that is predefined by the WWW server comes. When the session is terminated, a reaction of some sort or another such as error display, data retransmission or line disconnection may take place. Then, all the preceding operations such as retrieving operations become ineffective and end up with waste of time.

In the case of the Internet, techniques of displaying timeout-related information on the client terminal and making it possible to alter the timeout at the client terminal have been proposed (see, inter alia, Patent Document 1: Jpn. Pat. Appln. Laid-Open Publication No. 2003-141074).

The environment for acquiring and managing a vast quantity of information has been improved as a result of the advancement of networks such as the Internet and the increased availability of large capacity recording mediums in recent years. Additionally, it has been made possible to store various contents such as video contents and audio contents in a recording medium such as a hard disc contained in a personal computer (PC) or some other information processing apparatus as a result of the advancement of digitizing technologies that has also been witnessed in recent years. Furthermore, a PC can be connected to a remote electronic appliance by way of a network. For example, in the case of a network formed by using electronic appliances adapted to "UPnP (universal plug and play)" where a number of appliances that operate as so many servers are connected to a single client, an electronic appliance can communicate with a plurality of servers as a client.

It has been necessary to date for a client to acquire information from each server when there are a number of servers connected to the client. In such a case, timeout is defmed by the client in a manner as described above as criterion for deciding if communication is possible or not. If the client requests a server to start communication and there is no response from the server before the defined timeout, the client determines it is not possible to be connected to the server.

With the above-described technique of defining a single timeout, however, there arises a problem that the server who is slow in response will be treated as "no response" server if the timeout is defined by referring to a server who responds quickly. If, on the other hand, the timeout is defined by referring to a server who responds slowly, a server who responds quickly has to waste time before a judgment of "communication possible" comes.

In view of the above-identified circumstances, it is desirable to provide a communication system, an information processing terminal device and a communication method adapted to define a response waiting time before timeout.

According to the present invention, the above object is achieved by providing an information processing terminal device comprising: a communication means for transmitting data to and receiving data from an information providing apparatus using a predetermined transmission format; a timing means for timing the duration from the time of transmitting data from the communication means to the time of receiving a response from the information providing apparatus made to the transmitted data ; and a communication control means for defining a response waiting time for the information providing apparatus as a function of the duration timed by the timing means and deciding whether a communication is available between the communication means and the information providing apparatus by referring to the defined response waiting time.

Preferably, in an information processing terminal device according to the invention, the communication means is adapted to transmit data to and receive data from each of a plurality of information providing apparatus and the communication control means is adapted to define a response waiting time for each of the information providing apparatus according to the duration timed by the timing means and decide whether a communication is available for each of the information providing apparatus by referring to the defmed response waiting time.

Preferably, the information processing terminal device according to the invention further comprises a memory means for storing the response waiting time defined by the communication control means; the communication control means being adapted to store identifying information for identifying the information providing apparatus held in communication with itself once in the past with the corresponding response waiting time in the memory means so as to decide whether a communication is available by referring to the response waiting time stored in the memory means.

The information for identifying the information providing apparatus includes the address thereof in the network, the port number for specifying an application in the communication system and the media access control (MAC) address.

According to the present invention, there is provided a communication system connecting an information providing apparatus and an information processing terminal device, wherein the information processing terminal device comprises: a communication means for transmitting data to and receiving data from the information providing apparatus; a timing means for timing the duration from the time of transmitting data from the communication means to the time of receiving a response from the information providing apparatus made to the transmitted data; and a communication control means for defining a response waiting time for the information providing apparatus as a function of the duration timed by the timing means and deciding whether a communication is available between the communication means and the information providing apparatus by referring to the defined response waiting time.

According to the present invention, there is provided a communication method to be used for an information providing apparatus and an information processing apparatus for mutual communications, the method comprising: a transmitting step of transmitting data from the information processing terminal device; a timing step of timing the duration from the time of transmitting data in the transmitting step to the time of receiving a response from the information providing apparatus made to the transmitted data; and a communication control step of defining a response waiting time for the information providing apparatus as a function of the duration timed in the timing step and deciding whether a communication is available with the information providing apparatus by referring to the defined response waiting time.

Thus, according to the invention, it is now possible to define a response waiting time before timeout for each information providing apparatus that operates as server. Therefore, it is possible to decide whether a communication is available by referring to the response waiting time for each information providing apparatus.

The invention will now be described with reference to the accompanying non-limiting drawings in which:

FIG 1 is a schematic block diagram of an embodiment of communication system according to the invention;

FIG 2 is a schematic block diagram of the embodiment of communication system of FIG 1, showing the functional configuration thereof;

FIG 3 is a schematic illustration of the process of defining a response waiting time of a terminal of the embodiment of communication system of FIG 1;

FIG 4 is a chart schematically illustrating the relationship of the servers and the respective waiting times before timeout of the embodiment of communication system of FIG 1; and

FIGS. 5A and 5B schematically illustrate two methods that can be used for defming timeout value in the embodiment of communication system of FIG 1.

A communication system according to the invention is a client/server system in which electronic appliances that operate as so many servers and an electronic appliance that operates as a client are interconnected. Note that there are a number of electronic appliances that operate as servers for a single electronic appliance that operates as a client. Such a client/server system may be a home network system in which one or more than one hard disc recorders that can store music contents and video contents and one or more than one PCs operate as servers or an intra-office network comprising one or more than one WWW servers, one or more than one mail servers and one or more than one data base servers.

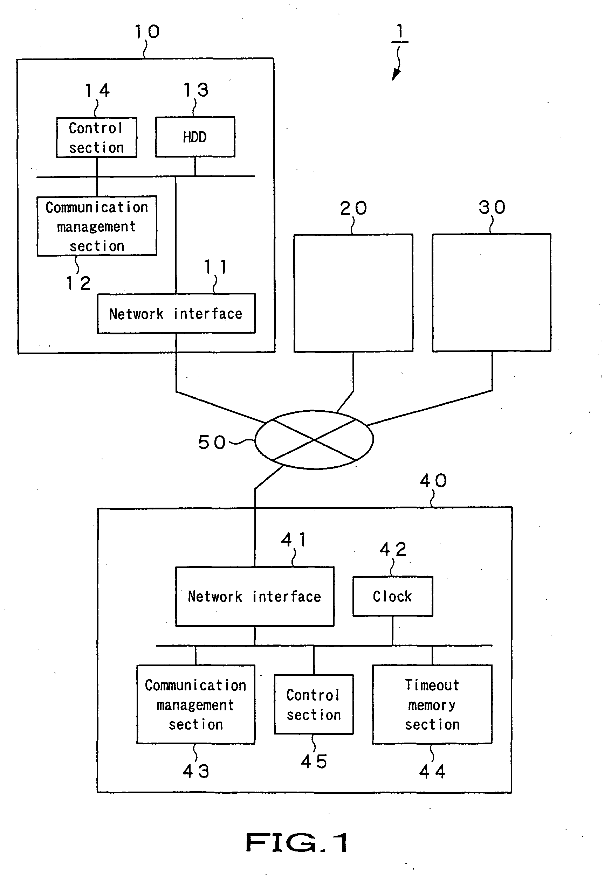

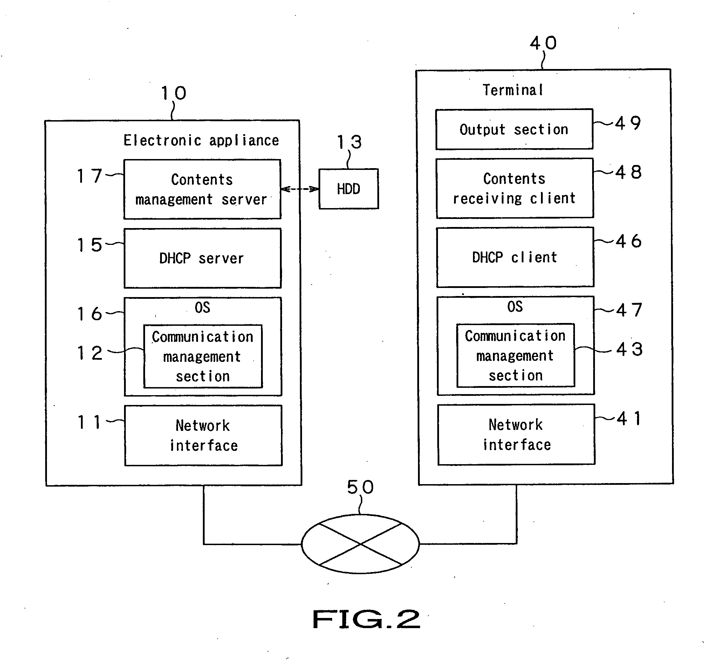

Now, the present invention will be described in greater detail by referring to the accompanying drawings that illustrate a preferred embodiment of communication system according to the invention. The communication system 1 illustrated in FIGS. 1 and 2 comprises an electronic appliance that operates as a single client and a number of electronic appliances that operate as servers, although the present invention is by no means limited thereto particularly in terms of system configuration.

The communication system 1 comprises electronic appliances 10, 20 and 30 that operate as so many servers and a terminal 40 that operates as a single client, which are interconnected by way of a network 50. The network 50 is adapted to operate according to the TCP (Transmission Control Protocol)/IP (Internet Protocol). It may be a UPnP network that is adapted to operate on the basis of the UPnP (Universal Plug and Play), which is the protocol for home networks. Ethernet (tradename), a communication method conforming to IEEE1394, Bluetooth (trandename) or some other appropriate method may be used for the connections among the electronic appliances 10 through 30, the terminal 40 and the network 50. Note that the connections do not depend on any physical connection method.

The electronic appliance 10 may typically be a storage apparatus that stores music contents and video contents and includes a network interface 11 for connecting itself to the network, a communication management section 12 that manages communications with external appliances, an HDD (hard disc drive) 13 that actually stores music contents and video contents and a control section 14 having a CPU, a ROM and a RAM.

The terminal 40 comprises a network interface 41 for connecting itself to the network, a clock 42, or a timing section, for timing the duration before receiving a response from an electronic appliance to the data transmitted from the network interface 41, which is equal to the response time of the electronic appliance (server), a communication management section 43 for defming the response waiting time for the server as a function of the duration timed by the clock 42 and deciding whether a communication is available between itself and the server by referring to the defined response waiting time and a timeout memory section 44 for storing the defined response waiting time for each of the electronic appliances. The above-described components are collectively managed by a control section 45 having a CPU, a ROM and a RAM. Although not shown, the terminal 40 may additionally comprise a speaker, a liquid crystal display section and so on as means for presenting sounds and images to the user.

Electronic appliances that can operate as servers in the above-described communication system 1 include personal computers (to be referred to as PCs hereinafter) that can be connected to an external network such as the Internet, DVD (digital versatile disc) players and home electronic appliances comprising a large capacity memory device such as a hard disc recorder. The terminal 40 may be a communication apparatus such as a mobile telephone set, a PC peripheral apparatus such as a printer or a scanner, a television receiving set, an STB (Set Top Box) for digital terrestrial television broadcasting or an STB for satellite digital broadcasting.

FIG. 2 is a schematic block diagram of the embodiment of communication system of FIG 1, showing the functional configuration thereof that allows the electronic appliance 10 and the terminal 40 to be connected to each other by way of the network. Since the same functional configuration can be used for connecting the terminal 40 to the electronic appliance 20 and the electronic appliance 30 by way of the network, it will not be described any further for the electronic appliances 20 and 30.

The electronic appliance 10 is equipped with a function of operating as DHCP (Dynamic Host Configuration Protocol) server 15 in the communication system 1, which is a client/server system. The communication management section 12 of the electronic appliance 10 is controlled by an OS (Operating System) 16. The electronic appliance 10 also has a contents management server 17 that manages the contents stored in the HDD. On the other hand, the terminal 40 that is the destination of delivery of contents has a DHCP (Dynamic Host Configuration Protocol) client 46 that is equipped with a function of operating in the communication system 1, which is a client/server system, an OS 47 that controls the communication management section 43, a contents receiving client 48 that receives contents and an output section 49 that includes a display and/or one or more than one speakers.

The contents management server 17 of the electronic appliance 10 is adapted to output various contents stored in the HDD 13 to the OS 16 after carrying out a compression process and other processes on the contents. The communication management section 12 that operates for a function of the OS 16 generates IP packets from the input data and outputs the generated IP packets to the network interface 11. The network interface 11 by turn outputs the input IP packets to the network 50.

The communication management section 43 of the OS 47 of the terminal 40 takes out the part of the data from the IP packets received by way of the network interface 41 and outputs them to the contents receiving client 48. The contents receiving client 48 sequentially converts the IP packets delivered from the contents management server 17 into reproduction signals. The output section 49 converts the reproduction signals into sounds and/or images and outputs them.

The DHCP client 46 requests the DHCP server 15 to assign an IP address. The headers of the IP packets that are transmitted and received according to the TCP/IP describe the IP address of the electronic appliance 10 that is the delivering party and the IP address of the terminal 40 that is the receiving party.

Normally, "timeout" is defmed among communication terminals that are connected to each other by way of a network so that, when one of the terminals cannot get any response from a destination terminal for a predetermined period of time, it produces a reaction such as error display, data retransmission or line disconnection and moves to the next process. There are some pieces of software, or computer programs, for personal computer communications that are adapted to disconnect the line when a non-operational state continues for a predetermined period of time for the purpose of reducing the charge.

When there are a number of servers as in the case of the communication system 1 of this embodiment, it is not convenient to define a single waiting time before timeout because the response time differs among the electronic appliances of the servers because their performances and characteristics differ. Therefore, in the communication system 1 of this embodiment, the terminal 40 is adapted to define the waiting time before timeout for each of the number of electronic appliances of the servers connected to the network. In the following description, the electronic appliance 10 that operates as server is referred to as server A and the electronic appliance 20 that operates as server is referred to as server B, whereas the electronic appliance 30 that also operates as server is referred to as server C.

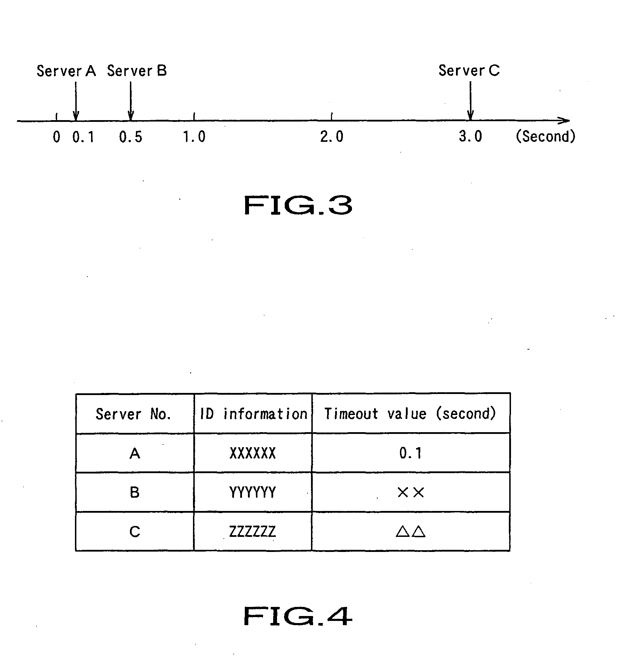

How the terminal 40 defines a response waiting time will be described blow by referring to FIG 3. In FIG 3, the horizontal axis represents time and the responses of the servers are schematically illustrated on the horizontal axis.

When the power source of the terminal 40 is turned on or when the state of the network 50 has changed and the server to be connected to the terminal 40 is missing, for instance, the terminal 40 transmits a request for connection acknowledgment to the network 50 on a multicast basis. If there is a server who is assigned to the selected port on the network 50, the server transmits an acknowledgement (Ack). If there are a number of servers, they transmit respective responses but their response times may differ from each other. Considering those servers who may show a long response time, a relatively long waiting time is defined before timeout for the first connection acknowledgement (to be referred to as timeout value, if necessary). The timeout value needs to be sufficiently long so as to make it possible to receive a response from a server whose response time is extremely long. FIG 3 shows that the terminal 40 receives a response from the server A 0.1 seconds after the transmission of a request for connection acknowledgement on a multicast basis, a response from the server B 0.5 seconds after the transmission and a response from the server C 3 seconds after the transmission.

Then, the terminal 40 stores the names of the servers with whom it has communicated once for the first connection acknowledgement and their respective response times in the timeout memory section 45 with server ID information that can discriminate the servers. The server ID information may be UUIDs for the UPnP, IP addresses, port numbers and/or MAC addresses for the TCP/IP For example, the terminal 40 may store a table of the relationship of the servers and the respective waiting times before timeout as shown in FIG 4 in the timeout memory section 45. In the table of FIG. 4, server numbers, ID information and timeout values (in seconds) are correlated for storage. For example, ID information XXXXXX and a timeout value of 0.1 (sec) are described for the appliance with server number A. The terminal 40 waits for a response from each of the servers listed in the table of FIG 4 for the period of time stored in the table for the server.

The waiting time before timeout may be defined by calculating the average of several response times in the past as timeout value or by selecting the shortest response time of several response times in the past and updating it constantly as timeout value for each server. The process of defining the response waiting time may be carried out each time the power source of the terminal 40 is turned on or a test mode may be provided to observe the response time of each server periodically.

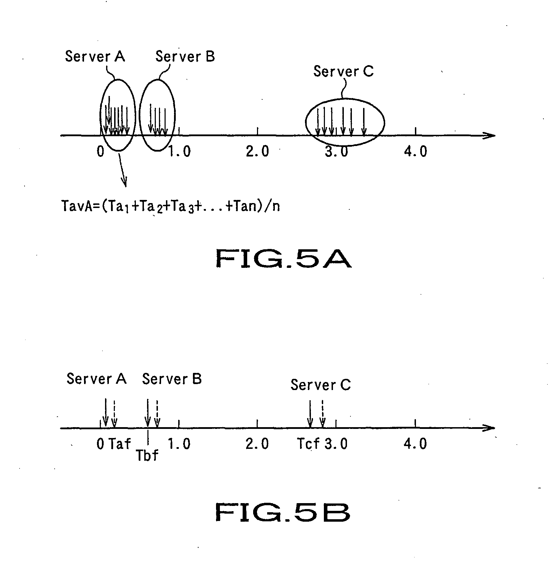

FIGS. 5A and 5B schematically illustrate two methods that can be used for defining timeout value in the communication system 1 of the embodiment. One of the two methods is illustrated in FIG 5A. When a number of response times are detected for each server as shown by arrows in FIG 5A, the communication management section 43 computes the average values of $T_{avA}$, $T_{avB}$, $T_{avC}$ from response times $T_{a1}$, $T_{a2}$, $T_{a3}$, ..., $T_{an}$ for the respective servers and defines them as timeout values of the servers. For example, the average value $T_{avA}$, for the server A is computed in the following manner.

$$\text{average value } T_{avA} = (T_{a1} + T_{a2} + T_{a3} + \cdots + T_{an}) / n$$

The other method is illustrated by FIG 5B. When a number of response times are detected for each server as shown by arrows in FIG 5B, the communication management section 43 updates the timeout value by selecting the shortest response time out of the detected response times for each server (Taf, Tbf, Tcf in FIG 5B). In FIG 5B, arrows with dotted lines indicate timeout values in the past and arrows with solid lines indicate the updated timeout values.

Theoretically, it may be conceivable to update the timeout value by selecting the longest response time out of the detected response times. However, such a technique may involve a process of discarding the detected longest response time if it is remarkably longer than the remaining response times. For example, an alternative method may be determining the standard deviation of the detected response times and adopting the time obtained by adding the standard deviation to the average value for the timeout value.

With each of the methods illustrated by referring to FIGS. 5A and 5B, the value obtained by adding a value (e.g., 1 second) to the determined value as margin may be used as timeout value. Alternatively the determined value may be multiplied by a predetermined multiplier (e.g., 1.2) and the product may be used as timeout value.

Thus, as described above, the terminal 40 defines a timeout value that matches the response times of each server for the server so that the inconveniences of the known techniques are eliminated. As pointed out earlier, the inconvenience of the known techniques includes that it is impossible to detect servers with a long response time when a small timeout value is selected by taking servers with a short response time into consideration and that the defined waiting time may be too long for servers with a short response time when a large timeout value is selected by taking servers with a long response time into consideration. Additionally, this embodiment improves the reliability of the judgment of whether a communication is available in the communication system 1 and it is now possible to discriminate a state where the terminal 40 is waiting for responses from servers and a state where the terminal 40 is standing by because of a timeout error.

Still additionally, it is possible to add information on the waiting time before timeout of each server stored in the timeout memory section 45 to the server list along with information on the servers connected to the terminal 40 including information on being active or non-active of each server. With such an arrangement, the user using the terminal 40 can visually recognize the status of the terminal 40 and that of each server so that he or she can easily discriminate if the terminal 40 is waiting for responses or trying to access the servers after a timeout.

A communication system according to the invention can find applications in so-called client/server systems for defining connection timeout of each appliance if such a client/server system is formed by using a plurality of servers or communication appliances regardless if the system employs wired connection or wireless connection and if the system adopts Ethernet (tradename), a communication method conforming to IEEE1394, Bluetooth (tradename) or some other communication method.

It should be understood by those skilled in the art that various modifications, combinations, sub-combinations and alterations may occur depending on design requirements and other factors insofar as they are within the scope of the appended claims or the equivalents thereof.

**Claims**

1. An information processing terminal device comprising:

   communication means for transmitting data to and receiving data from an information providing apparatus;
   timing means for timing the duration from the time of transmitting data from the communication means to the time of receiving a response from the information providing apparatus made to the transmitted data; and
   communication control means for defining a response waiting time for the information providing apparatus as a function of the duration timed by the timing means and deciding whether a communication is available between the communication means and the information providing apparatus by referring to the defined response waiting time.

2. The terminal device according to claim 1, wherein the communication means is adapted to transmit data to and receive data from each of a plurality of information providing apparatus and the communication control means is adapted to define a response waiting time for each of the information providing apparatus according to the duration timed by the timing means and decide whether a communication is available for each of the information providing apparatus by referring to the defined response waiting time.

3. The terminal device according to either claim 1 or claim 2, further comprising:

   memory means for storing the response waiting time defined by the communication control means; and
   the communication control means being adapted to store identifying information for identifying the information providing apparatus held in communication with itself once in the past with the corresponding response waiting time in the memory means so as to decide whether a communication is available by referring to the response waiting time stored in the memory means.

4. The terminal device according to according to any one of the preceding claims, wherein the communication control means is adapted to update the response waiting time according to the duration timed by the timing means each time it is connected to the information providing apparatus and decide whether a communication is available for the information providing apparatus by referring to the updated response waiting time.

5. The terminal device according to any one of the preceding claims, wherein the communication control means is adapted to define the response waiting time according to the shortest response time in a plurality of times of communication with the information providing apparatus and decide whether a communication is available for the information providing apparatus by referring to the defined response waiting time.

6. The terminal device according to any one of the preceding claims, wherein the communication control means is adapted to define the response waiting time according to the average value of the response waiting times of a plurality of times of communication with the information providing apparatus and decide whether a communication is available for the information providing apparatus by referring to the defmed response waiting time.

7. The terminal device according to any one of the preceding claims, wherein the communication control means is adapted to define the response waiting time according to the standard deviation of the response waiting times of a plurality of times of communication with the information providing apparatus and decide whether a communication is available for the information providing apparatus by referring to the defined response waiting time.

8. A communication system connecting an information providing apparatus and an information processing terminal device according to any one of the preceding claims.

9. A communication method to be used for an information providing apparatus and an information processing terminal device for mutual communications, the method comprising:

> a transmitting step of transmitting data from the information processing terminal device;
> a timing step of timing the duration from the time of transmitting data in the transmitting step to the time of receiving a response from the information providing apparatus made to the transmitted data; and
> a communication control step of defming a response waiting time for the information providing apparatus as a function of the duration timed in the timing step and deciding whether a communication is available with the information providing apparatus by referring to the defined response waiting time.

10. A computer program comprising program code means that, when executed on a computer system, instructs a computer system to carry out the steps according to claim 9.

11. A computer readable storage medium having recorded thereon program code means that, when executed on a computer system, instructs a computer system to carry out the steps according to claim 9.

10

14

13

Control
section

HDD

Communication
management
section

12

11

Network interface

20

30

50

40

41

42

Network interface

Clock

Communication
management
section

Control
section

Timeout
memory
section

43

45

44

1

FIG.1

**FIG.2**

Server A    Server B                                      Server C

0  0.1    0.5    1.0            2.0              3.0    (Second)

# FIG.3

| Server No. | ID information | Timeout value (second) |
|------------|----------------|------------------------|
| A | XXXXXX | 0.1 |
| B | YYYYYY | ×× |
| C | ZZZZZZ | △△ |

# FIG.4

Server A    Server B

Server C

$TavA=(Ta_1+Ta_2+Ta_3+\ldots+Tan)/n$

# FIG.5A

Server A    Server B

Server C

0 Taf    1.0      2.0    Tcf 3.0      4.0

Tbf

# FIG.5B